# EUROPEAN PATENT SPECIFICATION

(11) **EP 1 215 590 B1**
(45) Date of publication and mention of the grant of the patent: **02.05.2007**
(21) Application number: 01127909.8
(22) Date of filing: 23.11.2001
(51) Int. Cl.: G06F 17/30

(54) **Method and system for scalable, high performance hierarchical storage management**
Methode und System für skalierbare, hochperformante hierarchische Speicherverwaltung
Procédé et système de gestion de stockage hiérarchique échelonnable à haute performance

(30) Priority: 15.12.2000 EP 00127584
(43) Date of publication of application: 19.06.2002
(73) Proprietor: International Business Machines Corporation, Armonk, NY 10504 (US)
(72) Inventor: Bolik, Christian, 26129 Oldenburg (DE); Gemsjaeger, Peter, 55442 Stromberg (DE); Schroiff, Klaus, 52224 Stolberg (DE)
(74) Representative: Duscher, Reinhard

(56) References cited:
- EP-A- 0 645 709
- US-A- 5 832 522
- US-A- 5 991 753
- US-A- 6 108 748

## Description

### BACKGROUND OF THE INVENTION

The invention generally relates to hierarchical storage management systems and more specifically to a method and system for managing an hierarchical storage management (HSM) environment including at least one HSM server and at least one file server having stored a managed filesystem, wherein the at least one HSM server and the at least one file server are interconnected via a network and wherein digital data files are migrated temporarily from the at least one file server to the at least one HSM server.

Hierarchical Storage Management (HSM) is used for freeing up more expensive storage devices, typically magnetic disks, that are limited in size by migrating data files meeting certain criteria, such as the age of the file or the file size, to lower-cost storage media, such as tape, thus providing a virtually infinite storage space. To provide transparent access to all data files, regardless of their physical location, a small "stub" file replaces the migrated file in the managed filesystem. To the user this stub file is indistinguishable from the original, fully resident file, but to the HSM system the stub file provides important information such as where the actual data is located on the server.

An important difference between the views of a migrated file from the user's and the HSM system's perspective is that the user doesn't see the new "physical" size of the file, which after a file has been migrated is actually the size of the stub file, but still sees the "logical" size, which is the same as the size of the file before it was migrated.

One implementation category of an HSM system makes use of a client/server setup, where the client runs on the machine on which filesystems are to be managed, and where the server provides management of migrated data files and the included information.

Traditionally, an HSM system needs to perform the following tasks:
a) Determine which data files in the filesystem are eligible for migration (referenced as "candidates"). In order to determine the "best" candidates (with respect to their age and size), a full filesystem traversal is required;
b) Determine which previously migrated files have been modified in or removed from the client filesystem so their migrated copies can be removed from the server storage pool to reuse the space they occupied (referenced as "reconcilation"). To accomplish this, usually a full filesystem tree traversal is necessary.

In case of insufficient available space in the client filesystem, data files need to be migrated off the disk quickly to minimize application latency, herein referenced as "automigration". If a managed filesystem runs out of space, all applications performing write requests into this filesystem are blocked until enough space has been made available by migrating files off the disk to satisfy their write requests. In traditional HSM systems, data files in a managed filesystem are migrated serially, one file at a time.

An according data migration facility is disclosed in IBM Technical Disclosure Bulletin, published June 1973, pp. 205 - 208. A supervisorial controller is described for automatic administration and control of a computer system's secondary storage resources. A migration monitor is run-time event driven and acts as a first level event processor. The migration monitor records events and summarizes a data migration activity. A migration task is initiated by the migration monitor when a request is received. The migration task scans through an inventory of authorized data on the system and invokes a given algorithm to make the decision as to what data to migrate.

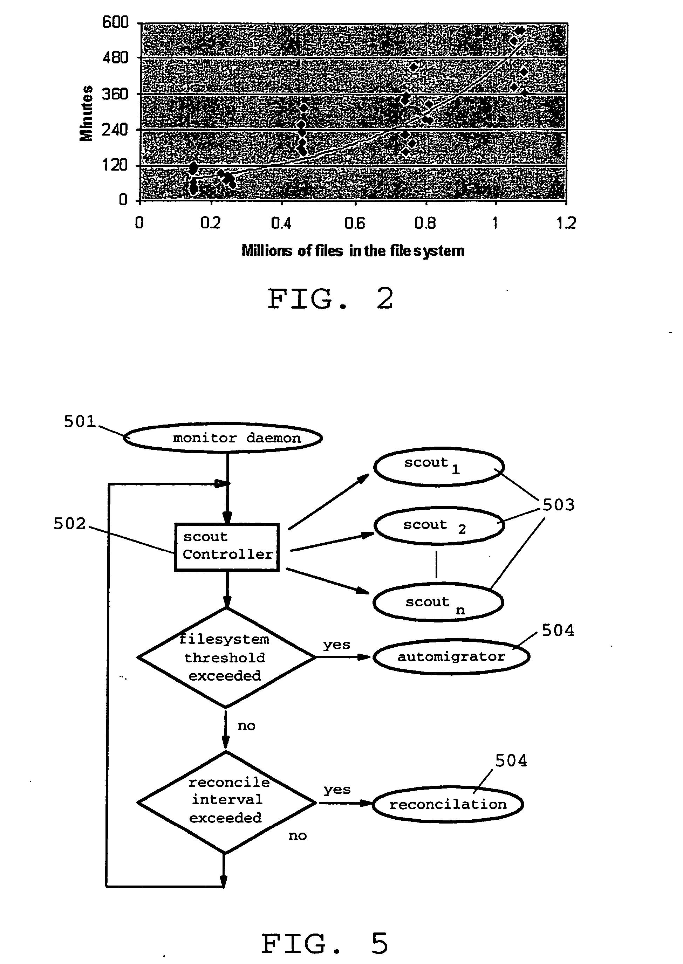

With the amount of data and the number of data files in a typical managed filesystem increasing logarithmically over time as illustrated in Fig. 2, scalability of the HSM system becomes an issue. Typical filesystem environments with such a behaviour are those of Internet providers handling the files of much more than thousands of customers, video processing scenarios like those provided on a video-on-demand server, or weather forecast picture processing where millions of high-resolution pictures are generated on a per day basis by weather satellites. In those environments the number of files to be handled often exceeds 1 million and is continuously increasing.

For the above reasons, there exists a strong need to provide HSM systems which are able to handle those very large filesystems.

Most of the known HSM approaches traverse the complete filesystem in order to gather eligible candidates for the automigration to remote storage. This system worked well in rather small environments but are no longer usable for current filesystem layouts due to the excessive processing time for millions of files. Therefore it is required to provide a more scalable mechanism consuming less system resources.

A known HSM approach addressing an above migration scenario and disclosed in U.S. Patent No. 5,832,522 proposes a placeholder entry (stub file) used to retrieve the status of a migrated data file. In particular, a pointer is provided by which a requesting processor can efficiently localize and retrieve a requested data file. Further, the placeholder entry allows to indicate migration of a data file to a HSM server.

Another approach, a network file migration system is disclosed in U.S. Patent No. 5,367,698. The disclosed system comprises a number of client devices interconnected by a network. A local data file storage element is provided for locally storing and providing access to digital data files stored in one or more of the client filesystems. A migration file server includes a migration storage element that stores data portions of files from the client devices, a storage level detection element that detects a storage utilization level in the storage element, and a level-responsive transfer element that selectively transfers data portions of files from the client device to the storage element.

Known HSM applications traverse the complete filesystem tree in order to gather eligible candidates for the automigration to a remote storage. This system worked well in rather small environments but are no longer usable for current filesystem layouts due to the excessive processing time for millions of files. A complete tree traversal disadvantageously impedes scalibility both in terms of duration and resource requirements, as both numbers grow logarithmically with the number of files in a filesystem. Furthermore, serial automigration is often not capable of freeing up space quickly enough to satisfy today's requirements. Therefore it is required to provide a more scalable mechanism consuming less system resources.

Due to the ever increasing size of storage volume as well as the pure number of storage objects makes it more and more difficult for a data management application to provide its service without an increasing need for more system resources which is obviously not desirable.

### SUMMARY OF THE INVENTION

It is therefore an object of the present invention to provide a method and system for efficiently handling large amounts of file based information in an Hierarchical Storage Management (HSM) environment.

Another object is to provide such a method and system in the context of automigration of a data management application.

It is yet another object to improve performance of an HSM system.

It is yet another object to provide such a method and system for handling large amounts of file based information in an HSM environment which is highly scalable with respect to the amount of file based information.

The above objects are solved by the features of the independent claims. Advantageous arrangements and embodiments are subject matter of the subclaims.

The underlying concept of the invention is, instead of attempting to find the "best" migration candidates all at once, to scan the filesystem only until a certain amount of migration candidates have been found. Further, the idea is that the process for determining candidates waits until one of two events to happen, namely until a specified wait interval expires or until an automigration process starts. The candidate determination process advantageously can resume the filesystem scan at the point where it stopped a previous scan and continue to look for migration candidates, again until a certain amount of candidates has been found.

The particular step of scanning the managed filesystem only until having detected a prespecified amount of migration candidate files advantageously enables that migration candidates are made available sooner to the migration process wherein migration can be performed as an automigration process not requiring any operator or user interaction. As the at least one attribute the file size and/or a time stamp of the file can be used.

In one embodiment, the automigration process is performed by a master/slave concept where the master controls the automigration process and selects at least one slave to migrate candidate data files provided by the master.

Another embodiment comprises the additional steps of ranking and sorting the candidate data files contained in the at least one list for identifying candidate data files, in particular with respect to the file size and/or time stamp of the data files contained in the at least one list for identifying candidate data files. Hereby the order of candidate data files to be migrated can be determined.

In particular, the proposed mechanism therefore makes the candidates determination process practically independent from the number of files in the filesystem and from the size of the filesystem. The invention therefore allows parallel processing of determination of candidate data files for the migration and the automigration process itself.

In addition, the automigration process generates a unique identifier to be stored on the HSM server that allows a direct access to migrated data files during a later reconciliation process.

The proposed scanning process therefore significantly reduces resource requirements since e.g. the storage resources for the candidate file list and the required processing resources for managing the candidate file list are significantly reduced. In addition, the scanning time is also reduced significantly.

The basic principal behind this invention is dropping the requirement of 100% accuracy for the determination of eligible migration candidates. Rather than looking for an analysis based on a complete list of migration candidates we can assume that the service is also functional based on a certain subset of files within a managed filesystem.

Thereupon, the invention allows for handshaking between the process for determining or searching migration candidates and the process of automigration.

As a result, the invention provides scalibility and significant performance improvement of such an HSM system. Thereupon secure synchronization or reconciliation of the client and server storage without need of traversing a complete client filesystem is enabled due to the unique identifier.

According to an embodiment, at least two lists for identifiying candidate data files are provided, whereby the first list is generated and/or updated by the scanning process and whereby the second list is used by the automigration process. The automigration process gathers the first list from the scanning process when all candidate data files of the second list are migrated. Both lists are worked on in parallel thus revealing parallelism between scanning and automigrating.

It is further noted, that besides the above described 'migrated' state, also a ,premigrated' state for data files in the managed filesystem can be used for which the migrated copy stored on the HSM server is identical to the resident copy of the data file in the managed filesystem.

### BRIEF DESCRIPTION OF THE DRAWINGS

The invention will now be described in the following in more detail by way of a preferred embodiment of the invention from which further features and advantages become evident, whereby reference is made to the accompanying drawings.
- Fig. 1: is a block diagram showing a typical hierarchical storage management (HSM) environment where the present invention can be applied to;
- Fig. 2: illustrates the known logarithmic increase of the amount of data and the number of data files in a typical managed filesystem;
- Fig. 3: is flow diagram for illustrating the basic mechanism of managing an HSM system according to the invention;
- Fig. 4: is another flow diagram for illustrating the basic mechanism of reconciling a managed filesystem migrated from a file server to an HSM system;
- Fig. 5: is another flow diagram showing a base logic of an automigration environment in accordance with the invention; and
- Figs.6a,b: illustrate a preferred embodiment of the mechanism according to the invention.

### DETAILED DESCRIPTION OF THE DRAWINGS

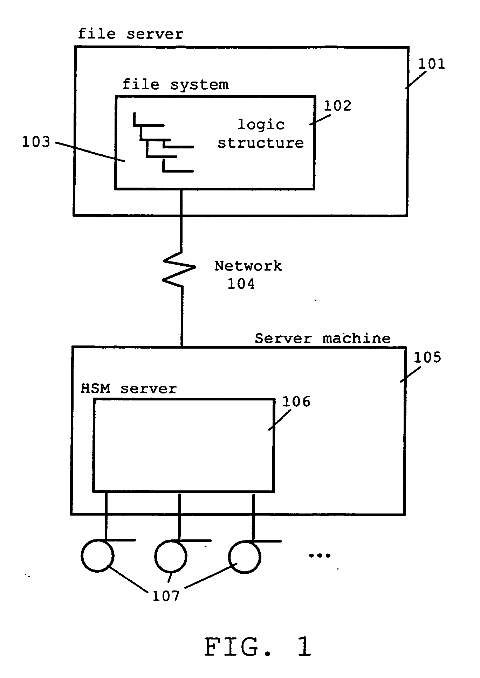

Fig. 1 shows a typical file server 101 that manages one or more filesystems 102. Each filesystem is usually organized in more or less complicated and more or less deeply nested file trees 103. The file server 101 is connected via a network 104, usually a Local Area Network (LAN) or a Wide Area Network (WAN), to another server machine 105 that contains an HSM server 106. The server machine 105 has one or more external storage devices 107, in this example tape storages, attached to. The HSM server 106 stores data, migrated from the file server 101 to the tape storages 107.

Fig. 2 illustrates that the amount of data and the number of data files in a typical managed filesystem is increasing logarithmically and is discussed beforehand.

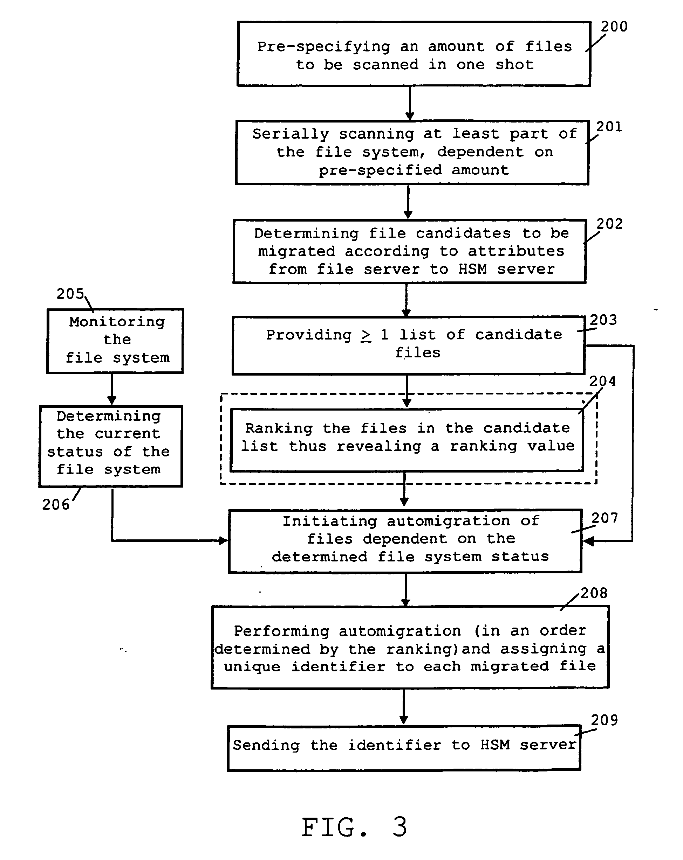

The flow diagram depicted in Fig. 3 illustrates the basic mechanism of managing an HSM system according to the invention.

In step 200, an amount of files, e.g. the number of files or the entire size of multiple files, for which a scan in the filesystem shall be performed, is pre-specified. Based on that pre-specified amount, at least part of the filesystem is scanned 201. It is an important aspect of the invention that not a whole filesystem is scanned through but only a part of it determined by the pre-specified amount.

In a next step 202, based on one or more attributes like the file size or a time stamp for the file (file age or the like), candidate files to be migrated from the file server to the HSM server are determined. The determined candidate files are put into a list of candidates 203. It is noteworthy hereby that, in another embodiment of the invention, two lists are provided. Such an embodiment is described hereinbelow in more detail.

Step 204 is an optional step (indicated by the dotted line) where the data files contained in the candidate list are additionally ranked in order to enable that the following selected files to be migrated can be migrated in a particular order.

In parallel to the steps 200 - 204 described above, the filesystem is monitored 205 and the current status of the filesystem ist determined 206. In step 207, an automigration of selected and allegedly ranked candidate data files is initiated or triggered by the determined filesystem status. For the details of that filesystem status it is referred to the following description.

After the automigration has been initiated, it is performed 208 by physically transferring data files to the HSM server and, in particular, a unique identifier is assigned to each migrated file. The concept and meaning of that unique identifier (ID) will become more evident from the following parts of the description. Finally the unique identifier is sent to the HSM server.

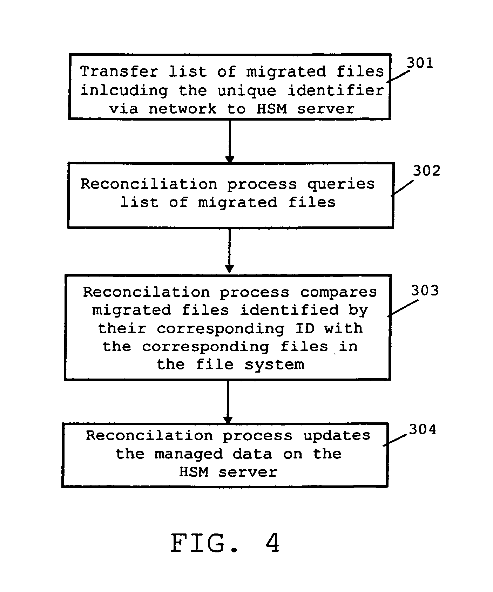

Now referring to the flow diagram depicted in Fig. 4, the basic mechanism of reconciling a managed filesystem migrated from a file server to an HSM system, in accordance with the invention, shall be illustrated. In a first step 301, a list of already migrated data files is transferred via the network from the HSM server. The transferred list, in particular, includes the unique identifier generated in the process described referring to Fig. 3. Then a reconciliation process queries 302 the transferred list of migrated files and compares 303 the migrated files, which are identified by their corresponding unique identifier (ID) with the corresponding files contained in the managed filesystem. Finally, the reconciliation process accordingly updates 304 the managed data on the HSM server.

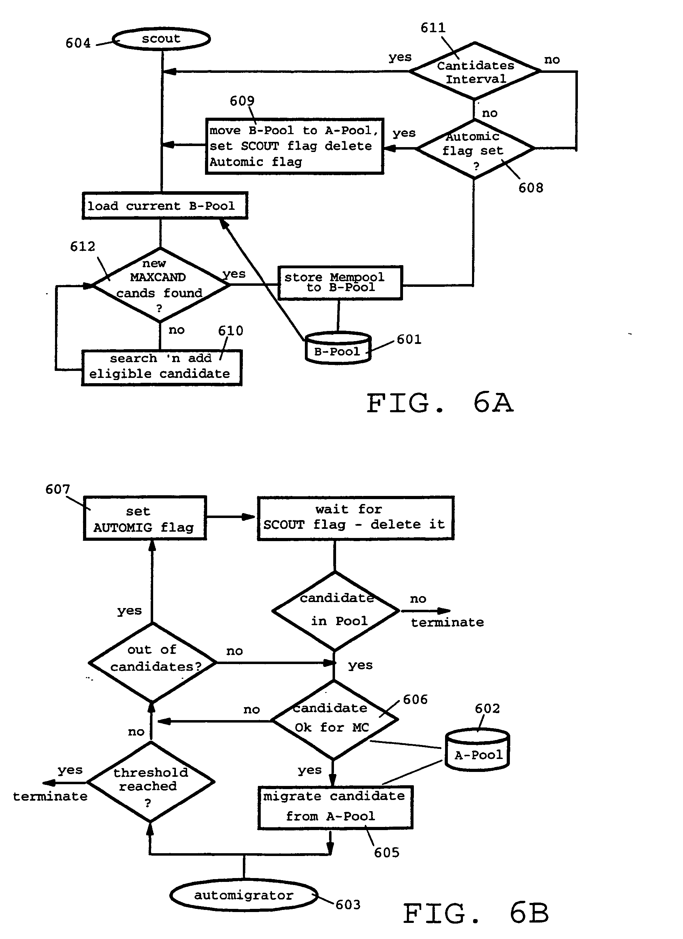

The flow diagram depicted in Fig. 5 shows a base logic of an automated HSM environment. A monitor daemon 501 starts a master scout process 502 and continuously monitors one or more filesystem. The master scout process 502 starts one slave scout process 503 per filesystem. Each slave scout process 503 scans its filesystem for candidate data files to be migrated.

If the monitor daemon 501 detects that the filesystem has exceeded its threshold limits, it starts a master automigration process 504, described in more detail hereinbelow.

If the value for a reconcile interval has exceeded, a reconciliation process 505 is started by the monitor daemon 501. The reconciliation process 505 is also described in more detail in the following.

The flow diagrams depicted in Fig. 6a and 6b illustrate a preferred implementation based on independent migration candidates pools 601, 602 for the automigration 603 and scanning process 604, the latter often (and in the following) referred to as "scout" process.

In this embodiment, the automigrator 603 is activated by another process - e.g. a monitor process that tracks filesystem events and takes appropiate measurements if certain thresholds are execeeded. The automigration 603 then starts to migrate 605 migration candidates to a remote storage as long as some defined threshold is exceeded. Prior to migrating 605 the files, the automigration process 603 performs management class (MC) checks 606 with the HSM server to find out whether a potential migration does not violate HSM server side rules.

If the automigration process 603 runs out of candidates, i.e. the list of identified candidates 602 is used up, it sets 607 a flag to signal a request to the scout process 604 in order to obtain a new list 601 of candidates. The scout process 604 receives 608 the flag and moves 609 the newly generated list 601 to the automigrator 603, setting 609 another flag to signal the automigrator 603 to continue with migrating files.

The scout process 604 itself starts to collect 610 new migration candidates. After completion of the scanning, the scout process 604 will wait until it receives another signal by the automigrator or by exceeding a definable value CANDIDATESINTERVAL 611. The value CANDIDATESINTERVAL 611 defines the time period during the scout process 604 remains sleeping in the background after an activity phase.

In the latter case of exceeding the CANDIDATESINTERVAL 611, it starts optimizing its candidates list with another scan. I.e. in case of not receiving a signal from the automigration process, in order to improve the quality of the candidates list scout process starts at each CANDIDATESINTERVAL 611 to scan for a new bunch of candidates. That bunch of candidates is defined by another value MAXCANDIDATES 612 that defines a number of required candidates following candidates criterias. Combined with the existing migration candidates list 601 the scout process 604 can either collect all candidates or just take the "best" subset in order to limit the required storage space. Thus the scout process traverses the managed filesystem in order to find eligible candidates for automigration. Rather than traversing the complete filesystem it stops as soon as MAXCANDIDATES 612 eligible candidates were found. Hereafter the process either waits for a dedicated event from the automigration process or sleeps till CANDIDATESINTERVAL 611 time has passed.

The above scout process has the following advantages:
. Minimal consumption of system resources (memory, processing time) required to find eligble candidates;
. highly scalable with minimal dependencies regarding the number of objects within a filesystem;
. increasing candidates quality in times of normal filesystem activity.

As a disadvantage, it is possible that the potentially best migration candidates based on the selection strategy are not used by the automigration process because the scout process has not yet traversed the corresponding subtree yet.

But the above advantages considerably exceed the disadvantages.

In the following, the different process steps of the whole migration mechanism proposed by the invention is described in more detail.

### Candidates Determination

### Avoiding full filesystem traversals:

Instead of attempting to find the "best" migration candidates in one shot, the filesystem is scanned only until a certain number of migration candidates have been found. Then, the candidates determination process waits for one of two events to happen:
. a specified wait interval expires, or
. automigration starts.

In this event, the process resumes the filesystem scan at the point where it left off and continues to look for migration candidates, again until a certain number of candidates has been found. These candidates are merged into the existing list of candidates and then "ranked" for quality (with respect to age and size), thus incrementally improving the quality of migration candidates in the system.

The benefit of this approach is that migration candidates are made available sooner to the automigration process, and significantly reduced resource requirements, making the candidates determination process practically independent from the number of files in the filesystem and from the size of the filesystem.

### Quick eligibility check:

A file can be eligible for migration only if it is not yet migrated. On filesystems that don't provide an XDSM API (X/Open Data Storage Management API), such as AIX JFS, the migration state typically needs to be determined by reading a stub file. In order to limit the number of files that the candidates determination process needs to read, usually only those files are read whose physical size meets the criteria for being a stub file, but even then the performance impact on filesystems with a high percentage of migrated files is significant as the read/write head of the hard disk constantly needs to jump back and forth between the inode area of the filesystem and the actual data blocks. To address this, the present invention proposes to require all stub files to have a certain characteristic, such as a specific physical file size. The candidates determination process, then, can assume that all files whose physical size matches the stub file size are migrated and disregard them from further eligibility checking that would require reading the stub file. This will exclude resident files whose size make them appear like stub files from migration, but the assumption is that the percentage of such files in a typical filesystem is small enough to make this a viable simplification.

In addition, the automigration process signals the need for additional migration candidates. Once the filesystem exceeds a certain fill rate or runs out-of storage capacitiy the automigration process gets started - usually initiated by the supervising daemon running permanently in the background.
Hereby it consumes migration candidates from a dedicated automigration pool and signals the scout process to dump his set of migration candidates to disk or to transfer it into a migration queue via shared memory. Based on the newly dumped candidates list the automigration process can now start to migrate data to the remote HSM server - preferably multithreaded and via multiple processes where each migrator instance cares about a certain set of files.

In order to guarantee maximum concurrency, the scout process can immediately start to scan for new migration candidiates after transferring his current list to the automigration process. The immediate generation of a new candidates list insures that the automigration process does not run out-of migration candidates or minimizes the wait time. Under normal conditions new candidates are found much faster than the network transfer of the already found candidates so we can assume that this is no bottleneck in this environment.

### Automigration

### Parallel Automigration

To lift the scalability limitations of the traditional serial automigration, the present invention proposes a master/slave concept to facilitate parallel automigration of files in the same filesystem. In this concept, a master automigration process reads from a list of migration candidates created by the candidates determination process and dispatches entries from this file to a certain number of automigration slaves ("migrators"). These slaves migrate the file they are assigned to to the HSM server, and then are available again for migrations as assigned by the master process.

The essential benefit is the scalability of the speed by which files can be migrated off the filesystem, by defining the number of parallel working automigration slaves. The complete control of the automigration process remains sequential (master automigration process), so that no additional synchronization effort is required, as it would be like in other typical parallel working systems. The "real work", the migration of the files itself, that consumes most of the time during the whole automigration process, is parallelized.

### Reconciliation

### Immediate Synchronization:

To reconcile a client/server HSM system, the HSM client, according to the prior art, has to perform the following steps:
. Retrieve the list of migrated files for a given filesystem from the HSM server (the "server list") and
. Traverse the filesystem tree, marking each unmodified migrated file as "found" in the server list.

When tree traversal is completed, all files in the server list not marked "found" will be marked for removal from a server storage pool, as they were either removed from the client filesystem, or their client copy was modified, thus invalidating the server copy. The reconciliation processing known in the prior art therefore requires a full filesystem tree traversal, which poses the scalibility problems described above. To avoid the need for a full traversal, the invention proposes the following processing:
. When migrating files, the HSM client stores a unique, filesystem-specific identifier (the "file ID") with the file on the HSM server;
. during reconciliation, the HSM client retrieves the list of migrated files, in particular by use of the unique ID stored in the list or array, from the server as before, but now the server list includes the file id for each entry;
. for each entry from the server list received, the HSM client invokes a platform-specific function that returns the file attributes of a file identified by its file id. On IBM AIX (UNIX derivate) this makes use of the vfs_vget VFS entry point, which should be invoked so that it reads the attributes directly from the underlying physical filesystem to avoid having to read the stub file, whereas on DMAPI-enabled filesystems the dm_get_fileattr API is used;
. if the attributes could be determined and match with those stored in the server list, processing continues with step 3 until all entries have been received. Otherwise the entry will be added to a list in client memory that will be used to mark files for removal on the server (the "remove list");
. when all entries from the server list have been received and processed, the HSM client loops through the remove list, and marks each of them for removal from the server storage pool.

### Quick premigration check:

In addition to the "migrated" and "resident" states of a file, some HSM systems provide a third state: "premigrated". A file is "premigrated" when its copy on the server (after migration) is identical to the (resident) copy of the file in the client filesystem. This is the case for instance immediately after a migrated file is copied back to the local disk: the file is resident, but its migrated copy is still present in the server storage pool, and both copies are identical.

The benefit of the premigration state is that such files can be migrated simply by replacing them with a stub file, without having to migrate the actual data to the HSM server. On filesystems that don't provide the XDSM API the HSM client needs to keep track of the premigrated files in a look-aside database (referenced as "premigration database"), as premigrated files don't have an associated stub file that could be used to store premigration information.

Those HSM clients, that rely on a look-aside database, need to traverse the local filesystem to verify the contents of the premigration database. However, making use of the same principle proposed in the previous section "Immediate Synchronization", the need for a full tree traversal can be removed here as well by storing a unique file id for each premigrated file in the premigration database, and then perform a direct mapping from its entries into the filesystem. Entries whose mapping is no longer successful can be removed from the premigration database.

Finally it is emphasized that combined with one another, the proposed measures resolve the most pressing scalibility problems and performance bottlenecks present in traditional client/server-based HSM systems.

## Claims

1. A method of managing an hierarchical storage management (HSM) environment, the environment including at least one HSM server and at least one file server having stored a managed filesystem, wherein the at least one HSM server and the at least one file server are interconnected via a network and wherein digital data files are migrated temporarily from the at least one file server to the at least one HSM server, the method comprising the steps:
providing at least one list for identifying candidate data files to be migrated;
prespecifying a scanning scope, wherein the scanning scope is determined by a prespecified number of migration candidate data files:
scanning the managed filesystem until the scanning scope is reached, wherein the managed filesystem is scanned until having reached the prespecified number of migration candidate data files:
selecting migration candidate data files according to at least one file attribute;
recording the selected migration candidate data files in the provided at least one list for identifying candidate data files;
migrating at least part of the selected candidate data files identified in the at least one list for identifying candidate data files from the file server to the HSM server.

2. Method according to any of the preceding claims, wherein the scanning of the managed filesystem is resumed at a location of the managed filesystem where a previous scanning is left off, and continued accordingly.

3. Method according to any of the preceding claims, wherein replacing a migrated data file in the managed filesystem by a stub file providing at least information about the location of the migrated data file on the HSM server.

4. Method according to any of the preceding claims, comprising the further steps of monitoring a current state of the managed filesystem and initiating automigration dependent on the monitored current state of the managed filesystem.

5. Method according to claim 4, comprising the further steps of automigrating candidate data files with respect to the list for identifying candidate data files and assigning a unique identifier to each of the migrated candidate data files.

6. Method according to claim 5, wherein the unique identifier is specific to the underlying filesystem allowing direct access to a migrated data file.

7. Method according to any of claims 5 to 6, wherein providing two lists for identifying candidate data files, whereby the first list is generated and/or updated by a scanning process and whereby the second list is used by a automigration process, and whereby the automigration process gathers the first list from the scanning process when all candidate data files of the second list are migrated.

8. Method according to any of claims 4 to 7, wherein the automigration process is performed by a master/slave concept where the master controls the automigration process and selects at least one slave to migrate candidate data files provided by the master.

9. Method according to any of the preceding claims, comprising the additional steps of ranking and sorting the candidate data files contained in the at least one list for identifying candidate data files, in particular with respect to the a file size and/or time stamp of the data files contained in the at least one list for identifying candidate data files.

10. Method according to any of the preceding claims, wherein the scanning of the managed filesystem is initiated dependent on expiration of a prespecified wait interval or initiated by the automigration process.

11. A method of reconciling a managed filesystem migrated from a file server to an hierarchical storage management (HSM) server via a network in accordance with the method according to any of claims 5 to 10, with a current state of the managed filesystem on the file server, wherein data files migrated to the HSM server are recorded in a list of migrated data files having a unique identifier for each of the migrated data files, the method comprising the steps of:
Quering the list of migrated data files migrated from the managed file server to the HSM server;
for each file entry in the list of migrated data files, retrieving from the managed filesystem at least one attribute of the migrated data file that is identified by the corresponding unique identifier;
comparing the retrieved attributes with the corresponding attributes stored in the list of migrated data files;
updating the HSM server for the migrated managed filesystem dependent on the results of the preceding step of comparing.

12. Method according to claim 11, wherein performing the steps of claim 12 by a reconciling process and wherein the reconciling process requests the list of migrated data files via the network from the HSM server.

13. Hierarchical storage management (HSM) system including at least one HSM server and at least one file server having stored a managed filesystem, the at least one HSM server and the at least one file server being interconnected via a network, where data files are migrated temporarily from the at least one file server to the at least one HSM, the system comprising:
a first means for scanning the filesystem and for identifying candidate data files to be migrated;
said first means being adapted to provide at least one list for identifying candidate data files to be migrated, to prespecify a scanning sope, wherein the scanning scope is determined by a prespecified number of migration candidate data files, and
scan the managed filesystem until having reached the prespecfied number of migration candidate data files: select migration candidate data files according to at least one file attribute: record the selected migration candidate data files in the provided at least one list for identifying candidate data files:
a second means for monitoring the managed filesystem;
a third means for migrating at least part of the selected candidate data files identified in the at least one list for identifying candidate data files from the file server to the HSM server.
a fourth means for reconciling the managed filesystem.

14. System according to claim 13, further comprising means for replacing a migrated data file in the managed filesystem by a stub file providing at least information about the location of the migrated data file on the HSM server.

15. System according to claim 13 or 14, further comprising means for assigning a unique identifier to at least part of the candidate data files stored in the storage means.

16. System according to any of claims 13 to 15, comprising at least two storage means for identifying candidate data files, where the first storage means is generated and/or updated by a scanning process and where the at least second storage means is used by a automigration process, and where the automigration process gathers the content of the first storage means from the scanning process when all candidate data files of the at least second storage means are migrated.

17. A data processing program for execution in a data processing system comprising software code portions for performing a method according to any of claims 1 to 12 when said program is run on said computer.

18. A computer program product stored on a computer usable medium, comprising computer readable program means for causing a computer to perform a method according to any of claims 1 to 12 when said program is run on said computer.

## Patentansprüche

1. Methode zum Verwalten einer Umgebung für die hierarchische Speicherverwaltung (Hierarchical Storage Management, HSM), wobei die Umgebung mindestens einen HSM-Server und mindestens einen Dateiserver enthält, auf dem ein verwaltetes Dateisystem gespeichert ist, wobei der mindestens eine HSM-Server und der mindestens eine Dateiserver über ein Netz miteinander verbunden sind, Dateien mit digitalen Daten vorübergehend von dem mindestens einen Dateiserver auf den mindestens einen HSM-Server migriert werden und die Methode folgende Schritte umfasst:
Bereitstellen mindestens einer Liste zum Ermitteln von zu migrierenden Kandidaten-Datendateien;
Vorabfestlegung eines Suchlaufbereichs, wobei der Suchlaufbereich durch eine vorab festgelegte Anzahl von Kandidaten-Datendateien für die Migration bestimmt wird;
Durchsuchen des verwalteten Dateisystems bis der Suchlaufbereich abgedeckt wurde, wobei das verwaltete Dateisystem so lange durchsucht wird, bis die vorab festgelegte Anzahl von Kandidaten-Datendateien für die Migration erreicht wurde;
Auswählen von Kandidaten-Datendateien für die Migration anhand mindestens eines Dateiattributs;
Erfassen der ausgewählten Kandidaten-Datendateien für die Migration in der bereitgestellten mindestens einen Liste zum Ermitteln von Kandidaten-Datendateien;
Migrieren von mindestens einem Teil der ausgewählten Kandidaten-Datendateien, die in der mindestens einen Liste zum Ermitteln von Kandidaten-Datendateien enthalten sind, vom Dateiserver auf den HSM-Server.

2. Methode nach einem der vorherigen Ansprüche, bei welcher die Durchsuchung des verwalteten Dateisystems an einer Stelle des verwalteten Dateisystems fortgesetzt und entsprechend weitergeführt wird, an der ein vorheriger Suchlauf abgebrochen wurde.

3. Methode nach einem der vorherigen Ansprüche, bei welcher eine migrierte Datendatei im verwalteten Dateisystem durch eine Rumpfdatei ersetzt wird, die mindestens Informationen über den Speicherort der migrierten Datendatei auf dem HSM-Server liefert.

4. Methode nach einem der vorherigen Ansprüche, welche die weiteren Schritte zur Überwachung eines aktuellen Status des verwalteten Dateisystems umfasst und die Automigration in Abhängigkeit vom überwachten aktuellen Status des verwalteten Dateisystems einleitet.

5. Methode nach Anspruch 4, welche die weiteren Schritte umfasst, die Automigration von Kandidaten-Datendateien anhand der Liste zum Ermitteln von Kandidaten-Dateien durchzuführen und jeder der migrierten Kandidaten-Datendateien eine eindeutige ID zuzuweisen.

6. Methode nach Anspruch 5, bei welcher die eindeutige ID für das zugrunde liegende Dateisystem spezifisch ist, was den direkten Zugriff auf eine migrierte Datendatei ermöglicht.

7. Methode nach einem der Ansprüche 5 bis 6, bei welcher zwei Listen zum Ermitteln von Kandidaten-Datendateien bereitgestellt werden, wobei die erste Liste von einem Suchlaufprozess generiert und/oder aktualisiert wird, die zweite Liste von einem Automigrationsprozess verwendet wird und der Automigrationsprozess die erste Liste vom Suchlaufprozess übernimmt, wenn alle Kandidaten-Datendateien der zweiten Liste migriert sind.

8. Methode nach einem der Ansprüche 4 bis 7, bei welcher der Automigrationsprozess von einem Master/Slave-Konzept ausgeführt wird, bei dem der Master den Automigrationsprozess steuert und mindestens einen Slave für die Migration von Kandidaten-Datendateien auswählt, die vom Master bereitgestellt werden.

9. Methode nach einem der vorherigen Ansprüche, welche die zusätzlichen Schritte umfasst, die in der mindestens einen Liste zum Ermitteln von Kandidaten-Datendateien enthaltenen Kandidaten-Datendateien zu hierarchisieren und zu sortieren, insbesondere hinsichtlich der Dateigröße und/oder der Zeitmarke der in der mindestens einen Liste zum Ermitteln von Kandidaten-Datendateien enthaltenen Datendateien.

10. Methode nach einem der vorherigen Ansprüche, bei welcher das Durchsuchen des verwalteten Dateisystems in Abhängigkeit vom Verstreichen eines vorab festgelegten Warteintervalls oder durch den Automigrationsprozess eingeleitet wird.

11. Methode zum Abgleichen eines verwalteten Dateisystems, das von einem Dateiserver über ein Netz gemäß der Methode nach einem der Ansprüche 5 bis 10 auf einen HSM-Server migriert wurde, mit einem aktuellen Status des verwalteten Dateisystems auf dem Dateiserver, wobei auf den HSM-Server migrierte Datendateien mit jeweils einer eindeutigen ID in einer Liste migrierter Datendateien erfasst werden, wobei die Methode folgende Schritte umfasst:
Abfragen der Liste migrierter Datendateien, die vom verwalteten Dateiserver auf den HSM-Server migriert wurden;
Pro Dateieintrag in der Liste migrierter Datendateien Abrufen aus dem verwalteten Dateisystem von mindestens einem Attribut der migrierten Datendatei, die durch die entsprechende eindeutige ID **gekennzeichnet** ist;
Vergleichen der abgerufenen Attribute mit den entsprechenden Attributen, die in der Liste migrierter Datendateien gespeichert sind;
Aktualisieren des HSM-Servers für das migrierte verwaltete Dateisystem in Abhängigkeit von den Ergebnissen des vorherigen Vergleichsschritts.

12. Methode nach Anspruch 11, bei welcher die Schritte von Anspruch 12 von einem Abgleichprozess ausgeführt werden und bei welcher der Abgleichprozess die Liste migrierter Dateien über das Netz vom HSM-Server anfordert.

13. System für die hierarchische Speicherverwaltung (Hierarchical Storage Management, HSM), das mindestens einen HSM-Server und mindestens einen Dateiserver enthält, auf dem ein verwaltetes Dateisystem gespeichert ist, wobei der mindestens eine HSM-Server und der mindestens eine Dateiserver über ein Netz miteinander verbunden sind, Datendateien vorübergehend von dem mindestens einen Dateiserver auf den mindestens einen HSM-Server migriert werden und das System Folgendes umfasst:
erste Mittel zum Durchsuchen des Dateisystems und zum Ermitteln von zu migrierenden Kandidaten-Datendateien;
wobei die ersten Mittel so beschaffen sind, dass sie: mindestens eine Liste zum Ermitteln von zu migrierenden Kandidaten-Datendateien bereitstellen, um vorab einen Suchlaufbereich festzulegen, wobei der Suchlaufbereich durch eine vorab festgelegte Anzahl von Kandidaten-Datendateien für die Migration bestimmt wird, und das verwaltete Dateisystem durchsuchen, bis die vorab festgelegte Anzahl von Kandidaten-Datendateien für die Migration erreicht wurde, Kandidaten-Datendateien für die Migration anhand mindestens eines Dateiattributs auswählen und die ausgewählten Kandidaten-Datendateien für die Migration in der bereitgestellten mindestens einen Liste zum Ermitteln von Kandidaten-Datendateien erfassen;
zweite Mittel zum Überwachen des verwalteten Dateisystems;
dritte Mittel, um mindestens einen Teil der ausgewählten Kandidaten-Datendateien, die in der mindestens einen Liste zum Ermitteln von Kandidaten-Datendateien enthalten sind, vom Dateiserver auf den HSM-Server zu migrieren;
vierte Mittel zum Abgleichen des verwalteten Dateisystems.

14. System nach Anspruch 13, das ferner Mittel umfasst, um eine migrierte Datendatei im verwalteten Dateisystem durch eine Rumpfdatei zu ersetzen, die mindestens Informationen über den Speicherort der migrierten Datendatei auf dem HSM-Server liefert.

15. System nach Anspruch 13 oder 14, das ferner Mittel umfasst, um mindestens einem Teil der in den Speichermitteln gespeicherten Kandidaten-Datendateien eine eindeutige ID zuzuweisen.

16. System nach einem der Ansprüche 13 bis 15, das mindestens zwei Speichermittel zum Ermitteln von Kandidaten-Datendateien umfasst, bei dem die ersten Speichermittel von einem Suchlaufprozess generiert und/oder aktualisiert werden, bei dem die mindestens zweiten Speichermittel von einem Automigrationsprozess verwendet werden, und bei dem der Automigrationsprozess den Inhalt der ersten Speichermittel vom Suchlaufprozess erhält, wenn alle Kandidaten-Datendateien der mindestens zweiten Speichermittel migriert sind.

17. Datenverarbeitungsprogramm zur Ausführung in einem Datenverarbeitungssystem, das Softwarecodebereiche zum Anwenden einer Methode gemäß einem der Ansprüche 1 bis 12 umfasst, wenn das Programm auf dem Computer ausgeführt wird.

18. Computerprogrammprodukt, das auf einem vom Computer verwendbaren Medium gespeichert ist und computerlesbare Programmmittel umfasst, die einen Computer zum Anwenden einer Methode gemäß einem der Ansprüche 1 bis 12 veranlassen, wenn das Programm auf dem Computer ausgeführt wird.

## Revendications

1. Un procédé de gestion d'un environnement de gestion de stockage hiérarchique (HSM), l'environnement comprenant au moins un serveur HSM et au moins un serveur de fichiers dans lequel est stocké un système de fichiers géré, dans lequel le au moins un serveur HSM et le au moins un serveur de fichiers sont interconnectés via un réseau, et dans lequel des fichiers de données numériques sont sujets à migration temporaire, du au moins un serveur de fichiers au au moins un serveur HSM, le procédé comprenant les étapes consistant à :
fournir au moins une liste pour identifier des fichiers de données candidats devant subir une migration ;
pré-spécifier un champ de scrutation, dans lequel le champ de scrutation est déterminé par un nombre pré-spécifié de fichiers de données candidats à la migration ;
scruter le système de fichiers géré jusqu'à ce que le champ de scrutation soit atteint, dans lequel le système de fichiers géré est scruté jusqu'à avoir atteint le nombre pré-spécifié de fichiers de données candidats à la migration ;
sélectionner des fichiers de données candidats à la migration selon au moins un attribut de fichier ;
enregistrer les fichiers de données candidats à la migration sélectionnés dans la au moins une liste fournie, pour identifier des fichiers de données candidats ;
faire migrer au moins une partie des fichiers de données candidats sélectionnés ayant été identifiés dans la au moins une liste, pour identifier des fichiers de données candidats du serveur de fichiers au serveur HSM.

2. Procédé selon l'une quelconque des revendications précédentes, dans lequel la scrutation du système de fichiers géré est reprise à un emplacement du système de fichiers géré auquel une scrutation antérieure avait été stoppée, et est continuée de manière correspondante.

3. Procédé selon l'une quelconque des revendications précédentes, dans lequel on procède au remplacement du fichier de données ayant migré dans le système de fichiers géré est remplacé par un fichier de substitution, fournissant au moins une information concernant l'emplacement du fichier de données ayant migré sur le serveur HSM.

4. Procédé selon l'une quelconque des revendications précédentes, comprenant les étapes supplémentaires, de surveillance d'un état actuel du système de fichier géré et d'initiation de l'automigration selon l'état actuel surveillé du système de fichiers géré.

5. Procédé selon la revendication 4, comprenant les étapes supplémentaires consistant à effectuer l'automigration des fichiers de données candidats par rapport à la liste pour identifier des fichiers de données candidats, et d'affectation d'un identificateur unique à chacun des fichiers de données candidats ayant migré.

6. Procédé selon la revendication 5, dans lequel l'identificateur unique est spécifique au système de fichier sous-jacent, permettant un accès direct à un fichier de données ayant migré.

7. Procédé selon l'une quelconque des revendications 5 à 6, dans lequel on procède à la fourniture de deux listes pour identifier des fichiers de données candidats, de manière que la première liste soit générée et/ou mise à jour par un processus de scrutation, et de manière que la deuxième liste soit utilisée par un procédé d'automigration, et dans lequel le procédé d'automigration collecte la première liste auprès du processus de scrutation, lorsque la totalité des fichiers de données candidats de la deuxième liste ont migré.

8. Procédé selon l'une quelconque des revendications 4 à 7, dans lequel le procédé d'automigration est effectué par un concept maître/esclave, dans lequel le maître commande le processus d'automigration et sélectionne au moins un esclave pour faire migrer des fichiers de données candidats fournis par le maître.

9. Procédé selon l'une quelconque des revendications précédentes, comprenant les étapes additionnelles, de classement et de tri des fichiers de données candidats, contenus dans la au moins liste pour identifier des fichiers de données candidats, en particulier eu égard à une taille de fichier et/ou à une estampille temporelle des fichiers de données, contenus dans la au moins une liste pour identifier les fichiers de données candidats.

10. Procédé selon l'une quelconque des revendications précédentes, dans lequel la scrutation du système de fichiers géré est lancée à l'expiration d'un intervalle d'attente pré-spécifié ou est lancée par le processus d'automigration.

11. Un procédé de réconciliation d'un système de fichiers géré ayant migré d'un serveur de fichiers à un serveur de gestion de stockage hiérarchique (HSM) via un réseau, suivant le procédé selon l'une quelconques des revendications 5 à 10, avec un état actuel du système de fichiers géré sur le serveur de fichiers, dans lequel les fichiers de données ayant migré au serveur HSM sont enregistrés dans une liste des fichiers de données ayant migré, ayant un identificateur unique pour chacun des fichiers de données ayant migré, le procédé comprenant les étapes consistant à :
consulter la liste des fichiers de données ayant migré, ayant migré du serveur de fichiers géré au serveur HSM ;
pour chaque entrée de fichier dans la liste des fichiers de données ayant migré, récupérer auprès du système de fichiers géré d'au moins un attribut du fichiers de données ayant migré, qui est identifié par l'identificateur unique correspondant ;
comparer les attributs récupérés aux attributs correspondants, stockés dans la liste des fichiers de données ayant migré ;
mettre à jour le serveur HSM pour le système de fichiers géré ayant migré, selon les résultats de l'étape précédente de comparaison.

12. Procédé selon la revendication 11, dans lequel les étapes de la revendication 12 sont exécutées par un processus de réconciliation, et dans lequel le processus de réconciliation demande la liste des fichiers de données ayant migré via le réseau, auprès du serveur HSM.

13. Système de gestion de stockage hiérarchique (HSM), comprenant au moins un serveur HSM et au moins un serveur de fichier, dans lequel est stocké un système de fichiers géré, le au moins un serveur HSM et le au moins un serveur de fichiers étant interconnectés via un réseau, dans lequel des fichiers de données sont amenés à migrer temporairement, du au moins un serveur de fichiers au au moins un serveur HSM, le système comprenant :
des premiers moyens pour scruter le système de fichiers et pour identifier des fichiers de données candidats devant migrer ;
lesdits premiers moyens étant adaptés pour fournir au moins une liste pour l'identification des fichiers de données candidats devant migrer, pour pré-spécifier un champ de scrutation, dans lequel le champ de scrutation est déterminé par un nombre prédéterminé de fichiers de données candidats à la migration, et
la scrutation du système de fichiers géré jusqu'à avoir atteint le nombre pré-spécifié de fichiers de données candidats à la migration :
la sélection les fichiers de données candidats à la migration selon au moins un attribut de fichier : l'enregistrement des fichiers de données candidats à la migration sélectionnés dans la au moins une liste fournie, pour identifier des fichiers de données candidats ;
des deuxièmes moyens pour surveiller le système de fichiers géré ;
des troisièmes moyens pour effectuer la migration d'au moins une partie des fichiers de données candidats sélectionnés, identifiés dans la au moins une liste pour identifier des fichiers de données candidats, du serveur de fichiers au serveur HSM ;
des quatrièmes moyens pour réconcilier le système de fichiers géré.

14. Système selon la revendication 13, comprenant en outre des moyens pour remplacer un fichier de données ayant migré dans le système de fichiers géré par un fichier de substitution, fournissant au moins une information concernant l'emplacement du fichier de données ayant migré sur le serveur HSM.

15. Système selon la revendication 13 ou 14, comprenant en outre des moyens pour affecter un identificateur unique, à au moins une partie des fichiers de données candidats stockés dans les moyens de stockage.

16. Système selon l'une quelconque des revendications 13 à 15, comprenant au moins deux moyens de stockage pour identifier des fichiers de données candidats, dans lequel les premiers moyens de stockage sont générés et/ou mis à jour par un processus de scrutation, et dans lequel les au moins deuxièmes moyens de stockage sont utilisés par un processus d'automigration, et dans lequel le processus d'automigration collecte le contenu des premiers moyens de stockage d'après le processus de scrutation, lorsque la totalité des fichiers de données candidats des au moins deuxièmes moyens de stockage ont migré.

17. Un programme de traitement de données pour exécution dans un système de traitement de données, comprenant des parties de codes logiciels pour mettre en oeuvre un procédé selon l'une quelconque des revendications 1 à 12, lorsque ledit programme fonctionne sur ledit ordinateur.

18. Un programme pour ordinateur stocké sur un support utilisable par un ordinateur, comprenant des moyens de programme lisibles par un ordinateur, pour qu'un ordinateur mette en oeuvre un procédé selon l'une quelconque des revendications 1 à 12, lorsque ledit programme fonctionne sur ledit ordinateur.
